# EUROPEAN PATENT SPECIFICATION

(11) **EP 2 582 590 B1**
(45) Date of publication and mention of the grant of the patent: **11.08.2021**
(21) Application number: 11794997.4
(22) Date of filing: 17.06.2011
(51) Int. Cl.: B01L 3/00, B65D 55/02

(54) **A CONTAINER COMPRISING A CLOSURE AND A BODY AND A METHOD FOR STORING A SAMPLE IN THE CONTAINER**
EIN BEHÄLTER MIT EINEM VERSCHLUSS UND EINEM KÖRPER UND EINEM VERFAHREN ZUR AUFBEWAHRUNG EINER PROBE IM BEHÄLTER
CONTENEUR COMPRENANT UNE FERMETURE ET UN CORPS ET UN PROCEDE DE STOCKAGE D'UN ECHANTILLON DANS LE CONTENEUR

(30) Priority: 18.06.2010 US 356364 P
(43) Date of publication of application: 24.04.2013
(73) Proprietor: Pathogen Detection Systems, Inc., Kingston, Ontario K7K 2Y2 (CA); Queen's University At Kingston, Kingston, Ontario K7L 3N6 (CA)
(72) Inventor: BROWN, R. Stephen, Kingston Ontario K7L 3Y6 (CA); MARCOTTE, Eric, Kingston Ontario K7P 3B9 (CA); WILTON, Doug, Kingston Ontario K7L 2G7 (CA); GALLANT, Peter, Kingston Ontario K7L 5H6 (CA); ROBINSON, David, Little Kimble Buckinghamshire HP22 5XS (GB); STOKES, Les, London England NW2 1RE (GB); HOLDCROFT, Peter, Berkhamsted Hertfordshire HP4 1TB (GB); MILES, Matthew, Berkhamsted Hertfordshire HP4 2LF (GB); WILKINSON, Simon, Berkhamsted Hertfordshire HP4 3QD (GB); UNDERWOOD, Lee, High Wycombe Buckinghamshire HP15 7JS (GB)
(74) Representative: Cooley (UK) LLP
(86) International application number: PCT/CA2011/000716
(87) International publication number: WO 2011/156912

(56) References cited:
- EP-A1- 2 191 896
- CA-A1- 2 610 284
- US-A- 4 974 735
- US-A- 5 012 941
- US-A- 5 012 941
- US-A- 5 685 444
- US-A1- 2009 095 699
- US-B1- 6 398 067
- None

## Description

### FIELD OF THE DISCLOSURE

This disclosure relates to the field of containers, and more specifically, to a container having a closure with tamper-indicating and locking mechanisms and a base for mating with test equipment.

### BACKGROUND

Current containers for various substances such as test samples, beverages, foods, medicines and the like are provided with re-sealable closures. Such closures provide a benefit to the user in that the containers can be tightly sealed and resealed after opening. Although re-sealable containers provide benefits to users, by their nature they permit unauthorized and sometimes undetectable tampering with the substance. Accordingly, many containers include tamper-indicating closures, which are designed to make it apparent to a user that a container has been opened.

One problem with current tamper-indicating closures, such as tamper evident bands on soft drink bottle closures, is that they do not allow for secure locking of the container after an initial opening.

A need therefore exists for an improved container, a closure for a container, and a base for a container. Accordingly, a solution that addresses, at least in part, the above and other shortcomings is desired.
D1 (US 2009/095699 A1, Milante) describes a child-resistant container with a lid having a locking tooth that is designed to prevent a child from opening the container. The container can be opened and closed repeatedly while preserving the child-resistant feature since the locking tooth does not break off upon opening the container. If desired, the child-resistant feature can be disabled by breaking off the locking tooth. However, Milante does not describe a feature indicative of the container having been opened.
D2 (US 5,012,941, Abrams) discloses a tamper-proof container wherein the container and lid have respective through-holes that are aligned when the lid is closed. A strip is inserted through the holes when the lid is closed, and the strip is designed to break upon opening the lid to indicate tampering. However, Abrams does not describe a mechanism indicative of the container having been opened first and second times.
D3 (US 4,974,735, Newell) discloses a cap for a container that already has a lid or stopper. A first tamper proof mechanism includes a pair of tabs and corresponding slots that are automatically engaged the first time the lid is closed, and the tabs break off when the lid is opened for the first time. A second tamper proof mechanism includes a further tab and corresponding slot, which are engaged when the lid is close for the second time, and the tab breaks off when the lid is reopened.
D4 (EP 2191896 A1, Kaltek) discloses a device that includes box-like body for accommodating a stick holder for use in rapid testing of biological fluids, such as in anti-doping applications. The device includes a container for the biological fluid. The container has tabs that interface with the stick holder to allow testing of the biological fluid. The tabs are sealed to prevent tampering. Altering the sample can only be done by violating the container or the box-like body of the device.

### SUMMARY OF THE DISCLOSURE

The above is achieved by the container according to appended claim 1 and the method according to appended claim 12. Optional embodiments are described in the appended dependent claims.

According to the present disclosure, there is provided a container, comprising: a body; and, a closure; wherein the closure has a lid hinged to a ring mounted on the body, the lid moveable from an open position to a closed position; wherein the lid has a tab hinged thereto for: inserting into and engaging a slot formed in the ring as the lid is moved to the closed position from the open position to thereby lock the lid in the closed position; or, receiving and engaging a pin head of a pin mounted on the ring in a hole formed in the tab to thereby hold the lid in the closed position, the pin configured to detach from the ring when the tab and lid are returned to the open position. The container may include a recess formed in a base of the body for mating the container with test equipment.

### BRIEF DESCRIPTION OF THE DRAWINGS

Features and advantages of the examples of the present disclosure will become apparent from the following detailed description, taken in combination with the appended drawings, in which:
FIG. 1 is a left side view illustrating a container with its lid in an opened position with pin attached in accordance with an example of the disclosure;
FIG. 2 is a front view illustrating the container of FIG. 1 in accordance with an example of the disclosure;
FIG. 3 is a right side view illustrating the container of FIG. 1 in accordance with an example of the disclosure;
FIG. 4 is a rear view illustrating the container of FIG. 1 in accordance with an example of the disclosure;
FIG. 5 is a top view illustrating the container of FIG. 1 in accordance with an example of the disclosure;
FIG. 6 is a bottom view illustrating the container of FIG. 1 in accordance with an example of the disclosure;
FIG. 7 is a top perspective view illustrating the container of FIG. 1 in accordance with an example of the disclosure;
FIG. 8 is a bottom perspective view illustrating the container of FIG. 1 in accordance with an example of the disclosure;
FIG. 9 is a left side view illustrating the container of FIG. 1 with its lid in a held closed position in accordance with an example of the disclosure;
FIG. 10 is a front view illustrating the container of FIG. 9 in accordance with an example of the disclosure;
FIG. 11 is a right side view illustrating the container of FIG. 9 in accordance with an example of the disclosure;
FIG. 12 is a rear view illustrating the container of FIG. 9 in accordance with an example of the disclosure;
FIG. 13 is a top view illustrating the container of FIG. 9 in accordance with an example of the disclosure;
FIG. 14 is a bottom view illustrating the container of FIG. 9 in accordance with an example of the disclosure;
FIG. 15 is a top perspective view illustrating the container of FIG. 9 in accordance with an example of the disclosure;
FIG. 16 is a bottom perspective view illustrating the container of FIG. 9 in accordance with an example of the disclosure;
FIG. 17 is a left side view illustrating the container of FIG. 1 with its lid in an opened position with pin detached in accordance with an example of the disclosure;
FIG. 18 is a front view illustrating the container of FIG. 17 in accordance with an example of the disclosure;
FIG. 19 is a right side view illustrating the container of FIG. 17 in accordance with an example of the disclosure;
FIG. 20 is a rear view illustrating the container of FIG. 17 in accordance with an example of the disclosure;
FIG. 21 is a top view illustrating the container of FIG. 17 in accordance with an example of the disclosure;
FIG. 22 is a bottom view illustrating the container of FIG. 17 in accordance with an example of the disclosure;
FIG. 23 is a top perspective view illustrating the container of FIG. 17 in accordance with an example of the disclosure;
FIG. 24 is a bottom perspective view illustrating the container of FIG. 17 in accordance with an example of the disclosure;
FIG. 25 is a left side view illustrating the container of FIG. 1 with its lid in a locked closed position with pin detached in accordance with an example of the disclosure;
FIG. 26 is a front view illustrating the container of FIG. 25 in accordance with an example of the disclosure;
FIG. 27 is a right side view illustrating the container of FIG. 25 in accordance with an example of the disclosure;
FIG. 28 is a rear view illustrating the container of FIG. 25 in accordance with an example of the disclosure;
FIG. 29 is a top view illustrating the container of FIG. 25 in accordance with an example of the disclosure;
FIG. 30 is a bottom view illustrating the container of FIG. 25 in accordance with an example of the disclosure;
FIG. 31 is a top perspective view illustrating the container of FIG. 25 in accordance with an example of the disclosure;
FIG. 32 is a bottom perspective view illustrating the container of FIG. 25 in accordance with an example of the disclosure;
FIG. 33 is cross sectional view illustrating the container of FIG. 1 with its lid in a locked closed position with pin attached and with a test element installed in accordance with an example of the disclosure;
FIG. 34 is a detail view illustrating the base of the container of FIG. 1 without a test element installed in accordance with an example of the disclosure;
FIG. 35 is a detail view illustrating the closure of the container FIG. 33 in accordance with an example of the disclosure; and,
FIG. 36 is a partial cross sectional view illustrating the container of FIG. 33 installed in test equipment in accordance with an example of the disclosure.

It will be noted that throughout the appended drawings, like features are identified by like reference numerals.

### DETAILED DESCRIPTION OF THE EXAMPLES

In the following description, details are set forth to provide an understanding of the disclosure. In some instances, certain structures and techniques have not been described or shown in detail in order not to obscure the disclosure.

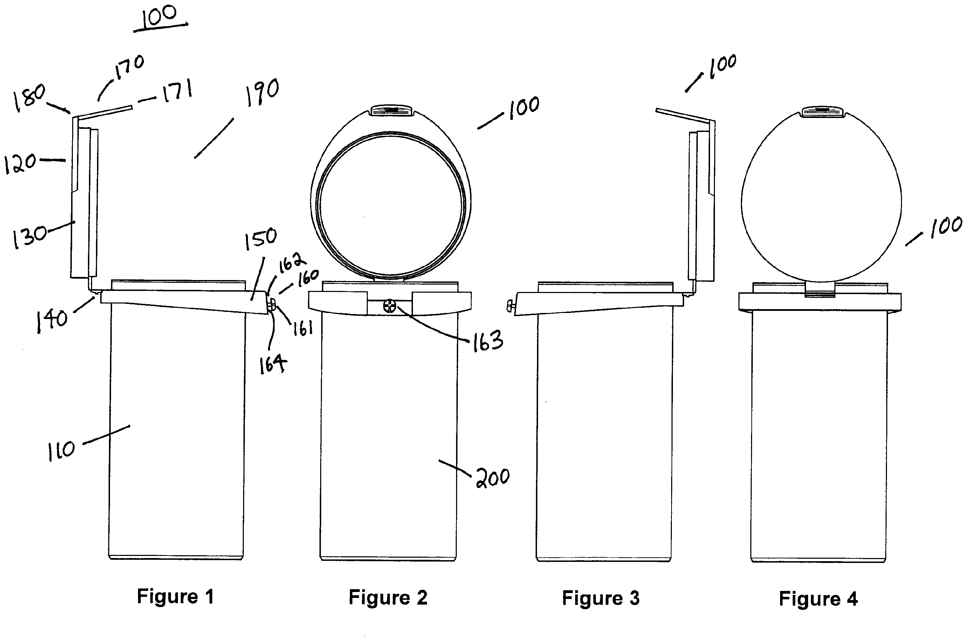

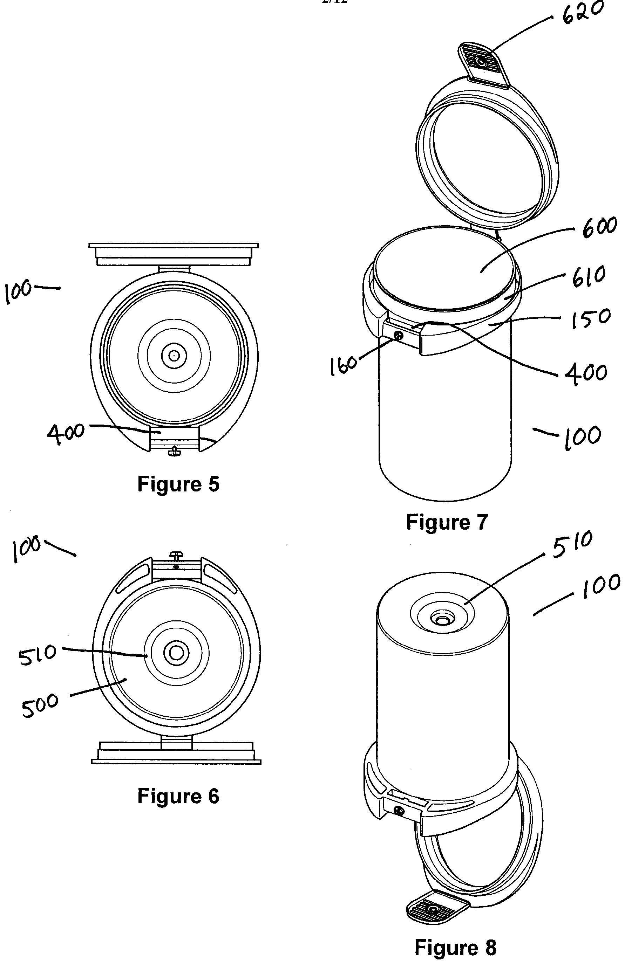

FIG. 1 is a left side view illustrating a container **100** with its lid **130** in an opened position **190** with pin **160** attached in accordance with the present disclosure. FIG. 2 is a front view illustrating the container **100** of FIG. 1 in accordance with an example of the disclosure. FIG. 3 is a right side view illustrating the container **100** of FIG. 1 in accordance with an example of the disclosure. FIG. 4 is a rear view illustrating the container **100** of FIG. 1 in accordance with an example of the disclosure. FIG. 5 is a top view illustrating the container **100** of FIG. 1 in accordance with an example of the disclosure. FIG. 6 is a bottom view illustrating the container **100** of FIG. 1 in accordance with an example of the disclosure. FIG. 7 is a top perspective view illustrating the container **100** of FIG. 1 in accordance with an example of the disclosure. And, FIG. 8 is a bottom perspective view illustrating the container **100** of FIG. 1 in accordance with an example of the disclosure.

According to the present disclosure, the container (or cartridge or test cartridge) **100** includes a hollow container body **110** and a closure **120.** The body **110** and closure **120** may be formed from a clear or opaque material such as glass, plastic, or metal. Plastics used may include polypropylene, polyethylene, polyamide including nylon and variations of nylon, blends, and copolymers of these. The closure **120** includes a lid **130** which is movably coupled by a hinge **140** to a ring or collar **150** mounted or formed on the body **110.** The ring **150** couples the closure **120** to the body **110.** The ring **150** may be a molded feature of the body **110** or may be integral with the body **110.**

In one example of the present disclosure, the body **110** is shaped to hold a liquid or solid substance. According to one example, the substance may be a liquid to be tested. According to one example, the body **110** may be cylindrical in shape having a side wall **200,** a base **500,** and an opening **600** at the top **610** of the body **110** which may be sealed by the closure **120.**

The closure **120** includes a tab **170** which is movably coupled by a hinge **180** to the lid **130.** The tab **170** has an opening or hole **620** formed therein for receiving a compressible head **161** of a pin **160** having a shaft **162** that is mounted on the ring **150** over an opening or slot **400** formed therein for receiving the leading edge **171** of the tab **170** and a portion of the tab **170** itself.

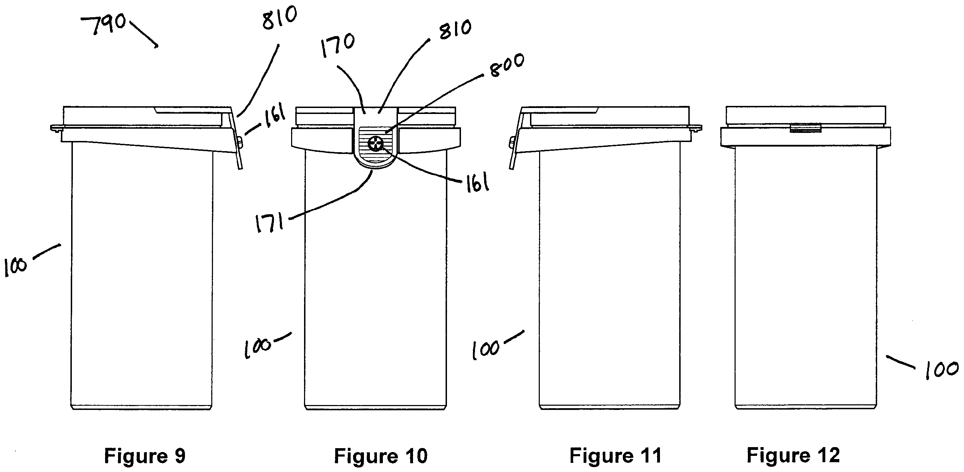

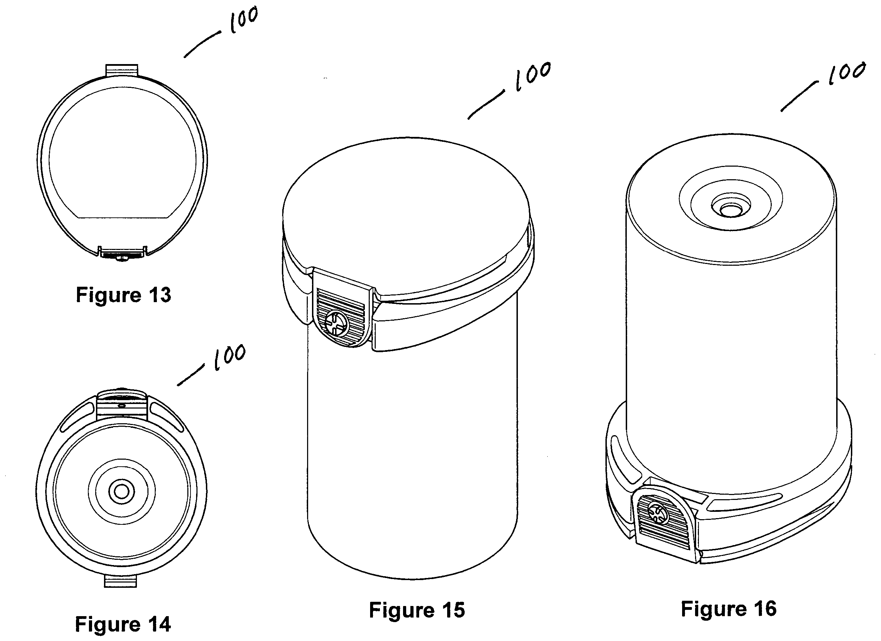

FIG. 9 is a left side view illustrating the container **100** of FIG. 1 with its lid **130** in a held closed position **790** in accordance with the present disclosure. FIG. 10 is a front view illustrating the container **100** of FIG. 9 in accordance with the present disclosure. FIG. 11 is a right side view illustrating the container **100** of FIG. 9 in accordance with the present disclosure. FIG. 12 is a rear view illustrating the container **100** of FIG. 9 in accordance with the present disclosure. FIG. 13 is a top view illustrating the container **100** of FIG. 9 in accordance with the present disclosure. FIG. 14 is a bottom view illustrating the container **100** of FIG. 9 in accordance with the present disclosure. FIG. 15 is a top perspective view illustrating the container **100** of FIG. 9 in accordance with an example of the disclosure. And, FIG. 16 is a bottom perspective view illustrating the container **100** of FIG. 9 in accordance with an example of the disclosure.

From the opened position **190** shown in FIG. 1, the lid **130** of the closure **120** may be moved to the held closed position **790** shown in FIG. 9 by operation of the hinges **140** and **180.**

In moving to the held closed position **790,** the pin head **161** compresses to pass through the hole **620** formed in the tab **170** after which the pin head **161** expands to (or near to) its original size to hold the lid **130** closed, the shaft **162** of the pin **160** having a smaller diameter than that of the pin head **161.** According to one example, grooves or notches **163** formed in the pin head **161** allow the pin head **161** to compress to pass through the hole **620** formed in the tab **170.** The pin head **161** may be tapered to allow it to more easily pass through the hole **620** formed in the tab **170.** The lid **130** may engage the top portion of the side wall **200** (i.e., the portion of the side wall **200** above the ring **150)** in the closed position **790** so as to render the container **100** at least partially air and/or water tight.

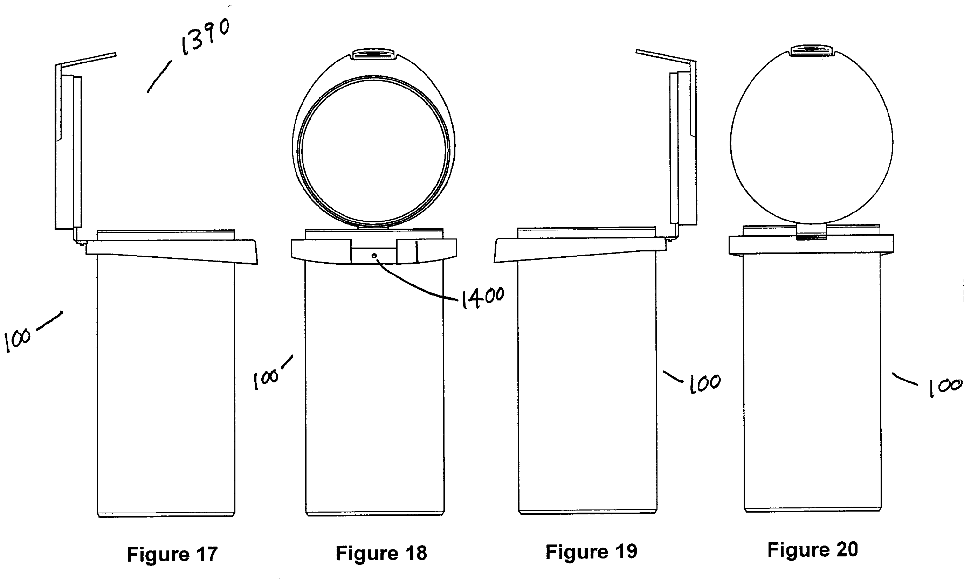

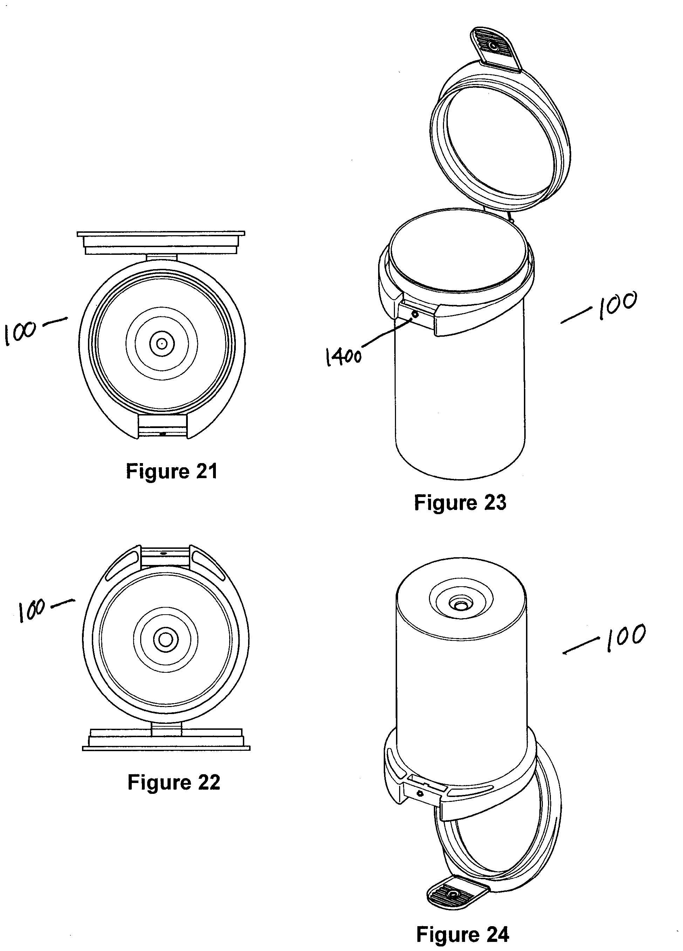

FIG. 17 is a left side view illustrating the container **100** of FIG. 1 with its lid **130** in an opened position **1390** with pin **160** detached in accordance with an example of the disclosure. FIG. 18 is a front view illustrating the container **100** of FIG. 17 in accordance with an example of the disclosure. FIG. 19 is a right side view illustrating the container **100** of FIG. 17 in accordance with an example of the disclosure. FIG. 20 is a rear view illustrating the container **100** of FIG. 17 in accordance with an example of the disclosure. FIG. 21 is a top view illustrating the container **100** of FIG. 17 in accordance with an example of the disclosure. FIG. 22 is a bottom view illustrating the container **100** of FIG. 17 in accordance with an example of the disclosure. FIG. 23 is a top perspective view illustrating the container of FIG. 17 in accordance with an example of the disclosure. And, FIG. 24 is a bottom perspective view illustrating the container of FIG. 17 in accordance with an example of the disclosure.

From the held closed position **790** shown in FIG. 9, the lid **130** of the closure **120** may be moved to the opened (e.g., reopened) position **1390** shown in FIG. 17 by operation of the hinges **140** and **180.**

In moving to the opened position **1390** from the held closed position **790,** the pin **160** is removed, broken away, or detached from the ring **150** at the base **164** of the pin shaft **163** by lifting of the tab **170.** The pin shaft **162** may be friction mounted in an opening or hole **1400** formed in the ring **150** to facilitate the removal, breaking away, or detachment of the pin **160** upon lifting of the tab **170.** Alternatively, the pin **160** may be a molded feature of the ring **150** or may be integral with the ring **150.** After breaking away, the pin **160** may be discarded. A container **100** with its pin **160** removed indicates that it has been reopened. In this way, the pin **160** acts as a tamper-indicator or tamper-indicating mechanism.

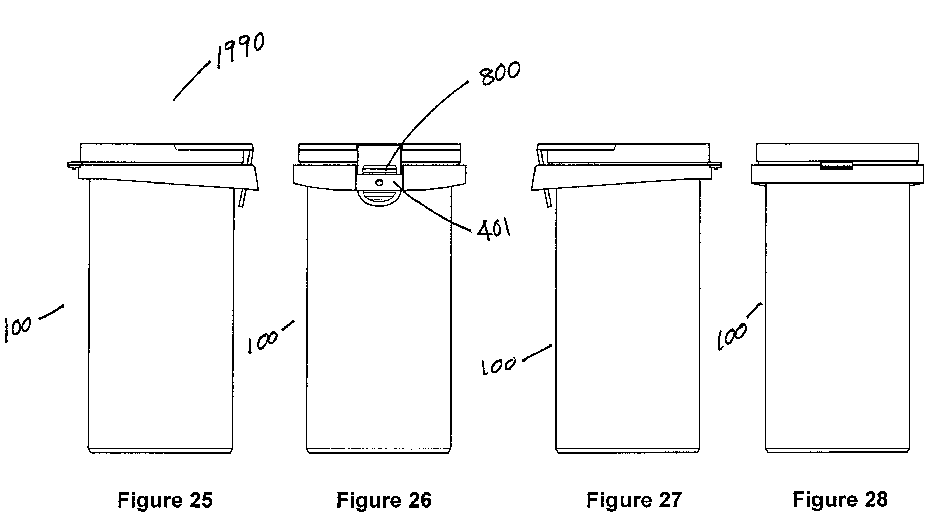

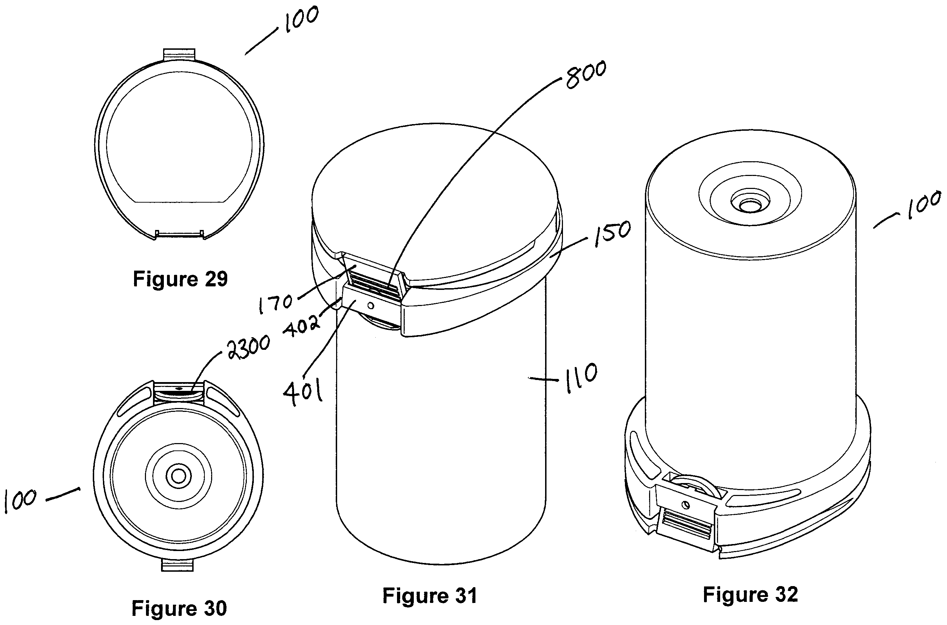

FIG. 25 is a left side view illustrating the container **100** of FIG. 1 with its lid **130** in a locked closed position **1990** with pin **160** detached in accordance with an example of the disclosure. FIG. 26 is a front view illustrating the container **100** of FIG. 25 in accordance with an example of the disclosure. FIG. 27 is a right side view illustrating the container **100** of FIG. 25 in accordance with an example of the disclosure. FIG. 28 is a rear view illustrating the container **100** of FIG. 25 in accordance with an example of the disclosure. FIG. 29 is a top view illustrating the container **100** of FIG. 25 in accordance with an example of the disclosure. FIG. 30 is a bottom view illustrating the container **100** of FIG. 25 in accordance with an example of the disclosure. FIG. 31 is a top perspective view illustrating the container **100** of FIG. 25 in accordance with an example of the disclosure. And, FIG. 31 is a bottom perspective view illustrating the container **100** of FIG. 25 in accordance with an example of the disclosure.

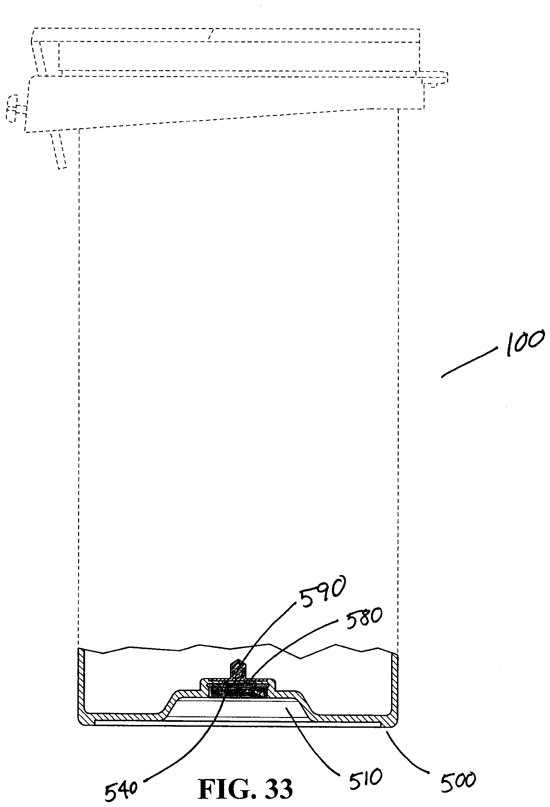

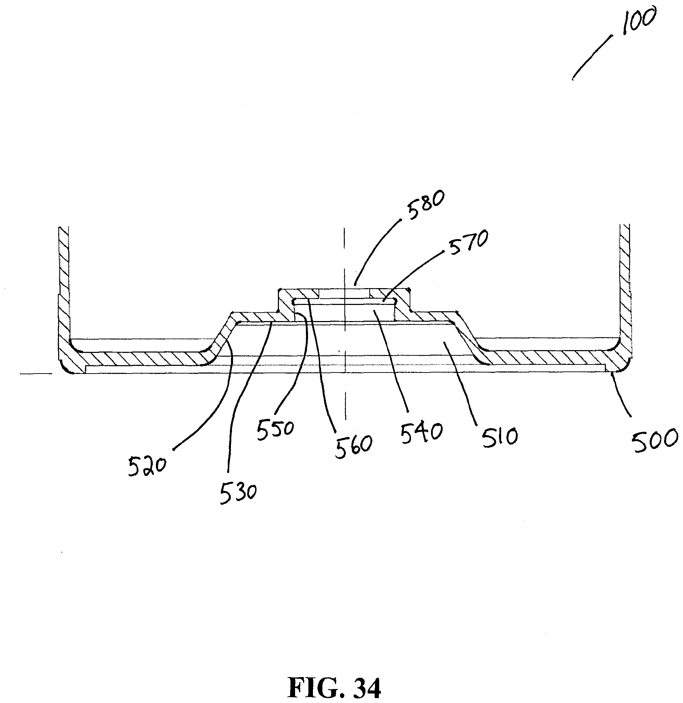

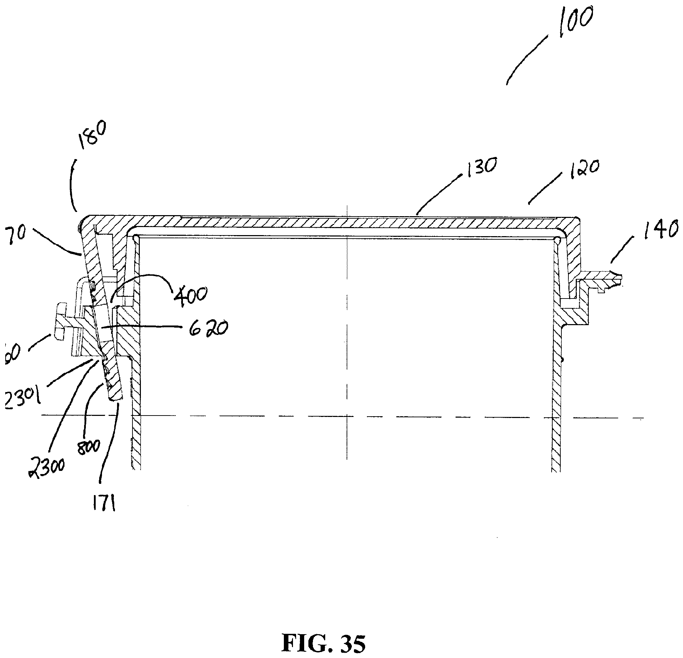

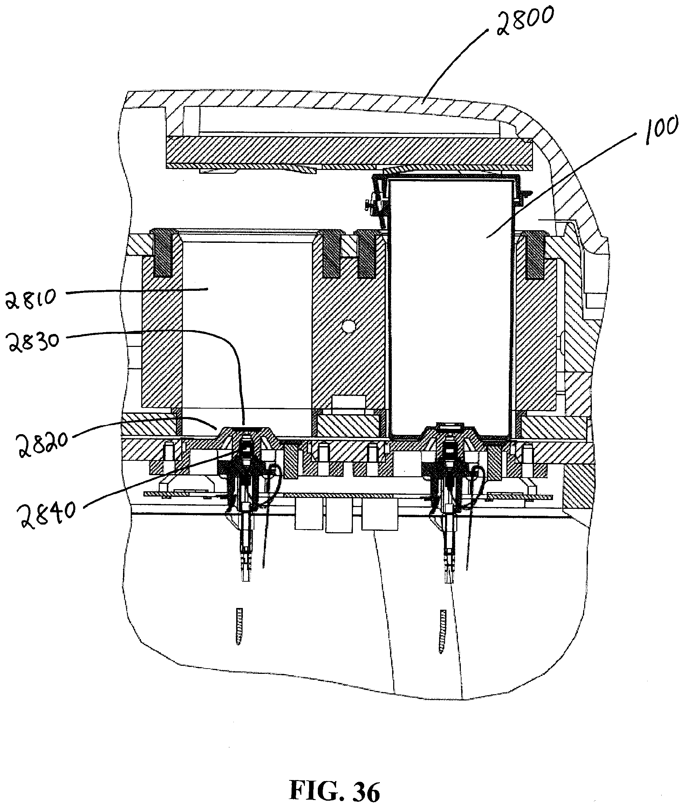

FIG. 33 is cross sectional view illustrating the container **100** of FIG. 1 with its lid **130** in a locked closed position **1990** with pin **160** attached and with a test element **590** installed in accordance with an example of the disclosure. FIG. 34 is a detail view illustrating the base **500** of the container **100** of FIG. 1 without a test element **590** installed in accordance with an example of the disclosure. FIG. 35 is a detail view illustrating the closure **120** of the container **100** FIG. 33 in accordance with an example of the disclosure. And, FIG. 36 is a partial cross sectional view illustrating the container **100** of FIG. 33 installed in test equipment **2800** in accordance with an example of the disclosure.

From the opened position **1390** shown in FIG. 17, the lid **130** of the closure **120** may be moved to the locked closed position **1990** shown in FIG. 25 by operation of the hinges **140** and **180.**

In moving to the locked closed position **1990,** the leading edge **171** of the tab **170** is pushed through the slot **400** formed in the ring **170.** Grooves or notches **800** formed on the outer surface **810** of the tab **170** engage an inner edge **2300** of the slot **400** formed in the ring **150** to thereby lock the lid **130** closed. The inner edge **2300** may be the lower front edge of the slot **400.** The leading edge **171** of the tab **170** may be rounded to allow it to more easily pass through the slot **400** formed in the ring **150.** The slot **400** may be tapered to more tightly engage the tab **170** and its notches **800.** The inner edge **2300** may have a protrusion or tooth **2301** formed thereon for engaging the grooves or notches **800** formed on the tab **170.**

According to one example, the tab **170** may be released from the slot **400** by breaking away a portion **401** of the ring **150** over the slot **400.** This portion **401** may have perforations **402** formed therein where it joins the ring **150** to facilitate its breaking away when the tab **170** is pulled away from the body **110** of the container **100.**

According to one example, as shown in FIGS. 33 and 35, the pin **160** may remain in place when the closure **120** is in the locked closed (i.e., re-closed) **1990** position. Note that this is not usually the way the container **100** would be used.

According to one example, the closure **120** may be formed or molded on the body **110** with the pin **160** inserted in the hole **620** formed in the tab **170** of the lid **130.** That is, the container **100** may be delivered in the held closed position **790** shown in FIGS. 9-16. Such delivery may ensure sterility is maintained inside the container **100** prior to use.

According to one example, the base **500** of the container **100** has a recess **510** formed therein to allow the container **100** to mate with an optical alignment mount (or raised cartridge mount) **2820** in an incubator, receptacle, or test chamber **2810** in external test equipment (or a test system) **2800** for testing a substance held within the container **100.** The recess **510** may be circular in shape with an inward sloping wall **520** (e.g., 65 degrees of arc) and flat base **530.**

According to one example, an inner recess **540** may be formed in the base **530** to allow for the mounting or insertion of a test element (e.g., a partition element, a siloxane partition element, etc.) **590.** An optical window **2830** of the optical alignment mount **2820** of the test equipment **2800** allows light to be transmitted to and received from the test element **590.** The inner recess **540** may be circular in shape with a vertical or near vertical wall **550** and a flat base **560.**

According to one example, an opening **580** may be formed in the base **560** of the inner recess **540** to allow for the mounting or insertion of the test element **590** to facilitate tests conducted by the test equipment **2800.** According to one example, the test element **590** may be co-molded with the container **100.** According to another example, the test element **590** may be inserted into the container **100** after molding. According to one example, the inner recess **540** may have an annual bore **570** formed in its wall **550** at or near the base **560.** The inner recess **540** may be sized to receive the test element **590** or a portion thereof to facilitate tests conducted by the test equipment **2800.**

The recesses **510, 540** formed in the container **100** provide protection for the test element **590** by elevating it above the level of the base **500.** As such, the test element **590** is separated from a surface upon which the container **100** may be placed thereby reducing or preventing contamination and/or damage of the test element **590.**

The recess **510** formed in the base **500** along with the optical alignment mount **2820** function to align or maintain the container **100** in the test equipment **2800** in an position optimized for the performance of optical devices **2840** (e.g., light emitting diodes ("LEDs"), lens, fiber optics, etc.) contained within the optical alignment mount **2820.**

In operation, according to one example, the container **100** is delivered in the held closed position **790.** The pin **160** being attached to the container **100** indicates that the container **100** has not been tampered with. The lid **130** is opened and the pin **160** is detached. A sample (e.g., water) is placed in the container **100** along with a substrate that will react with contaminants in the water to produce a detectable product. The lid **130** of the container **100** is then locked closed **1990** by inserting the tab **170** of the lid **130** in the slot **400** formed in the ring **150** of the closure **120.** The detectable product is partitioned by the test element (e.g., a partition element, a siloxane partition element, etc.) **590** that has been pre-mounted in the container **100.** The container **100** is placed in the test chamber or incubator **2810** within the test equipment **2800** where it is locked in place by mating of the recess **510** formed in the base **100** of the container and the optical alignment mount **2820** formed in the incubator. The test element **590** is illuminated by LEDs within the optical alignment mount **2820** and the presence and amount of the detectable product is determined using optical devices **2840** contained in the optical alignment mount **2820** and in the test equipment **2800.**

Thus, according to one example, there is provided a container **100** comprising: a body **110;** and, a closure **120;** wherein the closure **120** has a lid **130** hinged **140** to a ring **150** mounted on the body **110,** the lid **130** moveable from an open position **190, 1390** to a closed position **790, 1990;** wherein the lid **130** has a tab **170** hinged **180** thereto for: inserting into and engaging a slot **400** formed in the ring **150** as the lid **130** is moved to the closed position **1990** from the open position **190, 1390** to thereby lock the lid **130** in the closed position **1990;** or, receiving and engaging a pin head **161** of a pin **160** mounted on the ring **150** in a hole **620** formed in the tab **170** to thereby hold the lid **130** in the closed position **790,** the pin **160** configured to detach from the ring **150** when the tab **170** and lid **130** are returned to the open position **1390.** The container **100** may include a recess **510** formed in a base **500** of the body **110** for mating the container **100** with test equipment **2800.** The container **100** may include a test element **590** disposed in the recess **510** such that a portion of the test element **590** is in contact with a sample placed in the body **110.** The test element **590** may be separated from a surface in contact with the base **500.** The test element **590** may be in contact with the test equipment **2800.** The contact may include optical communication with the test equipment **2800.** The test element **590** may be integrated with material of the container **100.** And, the test element **590** may comprise a material different from that of the container **100.**

According to another example, there is provided a method for storing a sample in a container **100** having a lid **130,** comprising: initially providing the container **100** with the lid **130** in a closed position **790,** the container **100** having a first indicator **160** confirming that the lid **130** has not been opened; and, opening the lid **130,** placing the sample in the container **100,** and closing the lid **130,** including causing the first indicator **160** to indicate that the lid **130** has been opened and causing a second indicator **401** to indicate a closed state of the lid **130** after a single opening. The first indicator **160** may be indicative of a condition of an interior of the container **100** prior to opening the lid **130** and the second indicator **401** may be indicative of tampering with the sample. For example, the first indicator **160** may be indicative of a sterile condition of the interior of the container **100.**

According to another example, there is provided a method for testing a sample for the presence of a molecule of interest, comprising: combining in the container **100** (described above) the sample and a substance that can react with the molecule of interest to produce an analyte; placing the container **100** in test equipment **2800** such that the test element **590** is in optical communication with the test equipment **2800;** and, optically detecting presence of the analyte when it has partitioned into the test element **590;** wherein detection of the analyte in the test element **590** indicates presence of the molecule of interest in the sample. The sample and the substance may be combined in the container **100** in a liquid phase and partitioning may include the analyte moving from the liquid phase into the test element **590.** The molecule of interest may be an enzyme and the substance may include a substrate for the enzyme. The enzyme may be associated with a microorganism. The microorganism may be a biological contaminant. And, the biological contaminant may be a coliform bacteria.

The above examples may contribute to an improved container **100** and closure **120** for a container **100** and may provide one or more advantages. First, the closure **120** of the container **100** allows for secure locking of the container **100** after an initial opening. Second, the pin **160** of the closure **120** provides for a readily apparent tamper indication. Third, the recesses **510, 540** formed in the base **500** of the container **100** provide protection for the test element **590.**

## Claims

1. A container (100), comprising:
a body (110) having a ring (150) comprising a slot (400) and a pin (160) having a pin head (161);
a closure (120) comprising a lid (130) that is hinged to the ring (150) and moveable from an open position to a closed position; and
a tab (170) hinged to the lid (130);
wherein the tab (170) secures the lid (130) in the closed position according to:
(i) a first mechanism wherein the tab (170) engages the slot (400), or
(ii) a second mechanism wherein the tab (170) engages the pin head (161) of the pin (160), wherein the pin (160) is configured to detach when the tab (170) and lid (130) are returned to the open position.

2. The container of claim 1, further comprising a recess (510) formed in a base (500) of the body (110) that provides alignment of the container with a test equipment.

3. The container of claim 2, further comprising a test element (590) disposed in the recess (510).

4. The container of claim 3, wherein at least a portion of the test element (590) is elevated above an inside surface of the base (500).

5. The container of claim 3 or 4 , wherein the test element (590) is adapted to contact the test equipment.

6. The container of claim 5, wherein the contact includes optical communication with the test equipment.

7. The container of any one of claims 3 to 6, wherein the test element (590) is integrated with material of the container.

8. The container of any one of claims 3 to 6, wherein the test element (590) comprises a material different from that of the container.

9. The container of claim 3, 4, 5, 6, or 8, wherein the test element (590) comprises a siloxane material.

10. The container of any one of claims 3 to 9, wherein at least a portion of the test element (590) is in contact with a sample placed in the container (100).

11. The container of any one of claims 3 to 10, wherein alignment comprises optical alignment of the test element (590) with the test equipment.

12. A method for storing a sample in the container (100) of claim 1 having a lid (130), comprising:
initially providing the container (100) with the lid (130) in a closed position;
the container (100) having a first indicator including a pin head (161) and a pin (160) confirming that the lid (130) has not been opened;
opening the lid (130), wherein the first indicator indicates that he lid (130) has been opened when the pin (160) is detached;
placing the sample in the container (100);
closing the lid (130), wherein a second indicator (401) indicates a closed state of the lid (130) after a single opening.

13. The method of claim 12, wherein first indicator (160,161) is indicative of a condition of an interior of the container (100) prior to opening the lid (130), and the second indicator (401) is indicative of tampering with the sample.

14. The method of claim 12 or 13, comprising:
disposing a test element (590) in a base of the container (100);
storing the sample in the container together with a substance that can react with a molecule of interest in the sample to produce an analyte;
optically detecting presence of the analyte when it has partitioned into the test element (590);
wherein detection of the analyte in the test element (590) indicates presence of the molecule of interest in the sample.

15. The method of claim 14, wherein the sample and the substance are stored in the container (100) in a liquid phase and the analyte partitions into the test element (590) by moving from the liquid phase into the test element (590).

16. The method of claim 14, wherein the molecule of interest is selected from an enzyme, an enzyme associated with a microorganism, an enzyme associated with a microorganism that is a biological contaminant, and an enzyme associated with a biological contaminant that is a coliform bacteria; and the substance includes a substrate for the enzyme.

## Patentansprüche

1. Ein Behälter (100), der Folgendes beinhaltet:
einen Körper (110) mit einem Ring (150), der einen Schlitz (400) und einen Stift (160) mit einem Stiftkopf (161) beinhaltet;
einen Verschluss (120), der einen Deckel (130) beinhaltet, der mit einem Scharnier an dem Ring (150) befestigt ist und von einer offenen Position zu einer geschlossenen Position beweglich ist; und
eine Lasche (170), die mit einem Scharnier an dem Deckel (130) befestigt ist;
wobei die Lasche (170) den Deckel (130) in der geschlossenen Position sichert gemäß:
(i) einem ersten Mechanismus, wobei die Lasche (170) in den Schlitz (400) eingreift, oder
(ii) einem zweiten Mechanismus, wobei die Lasche (170) mit dem Stiftkopf (161) des Stifts (160) Eingriff nimmt, wobei der Stift (160) dazu ausgelegt ist, sich zu lösen, wenn die Lasche (170) und der Deckel (130) wieder zu der offenen Position zurückgekehrt sind.

2. Behälter gemäß Anspruch 1, der ferner eine Aussparung (510) beinhaltet, die in einer Basis (500) des Körpers (110) ausgebildet ist, die die Ausrichtung des Behälters mit einer Testausrüstung bereitstellt.

3. Behälter gemäß Anspruch 2, der ferner ein Testelement (590) beinhaltet, das in der Aussparung (510) angeordnet ist.

4. Behälter gemäß Anspruch 3, wobei mindestens ein Anteil des Testelements (590) über einer inneren Oberfläche der Basis (500) erhöht ist.

5. Behälter gemäß Anspruch 3 oder 4, wobei das Testelement (590) dazu angepasst ist, mit der Testausrüstung in Kontakt zu stehen.

6. Behälter gemäß Anspruch 5, wobei der Kontakt die optische Kommunikation mit der Testausrüstung umfasst.

7. Behälter gemäß einem der Ansprüche 3 bis 6, wobei das Testelement (590) mit Material des Behälters integriert ist.

8. Behälter gemäß einem der Ansprüche 3 bis 6, wobei das Testelement (590) ein Material beinhaltet, das sich von dem des Behälters unterscheidet.

9. Behälter gemäß Anspruch 3, 4, 5, 6 oder 8, wobei das Testelement (590) ein Siloxanmaterial beinhaltet.

10. Behälter gemäß einem der Ansprüche 3 bis 9, wobei mindestens ein Anteil des Testelements (590) mit einer in dem Behälter (100) platzierten Probe in Kontakt steht.

11. Behälter gemäß einem der Ansprüche 3 bis 10, wobei die Ausrichtung die optische Ausrichtung des Testelements (590) mit der Testausrüstung beinhaltet.

12. Ein Verfahren zum Speichern einer Probe in dem Behälter (100) gemäß Anspruch 1 mit einem Deckel (130), das Folgendes beinhaltet:
zunächst Bereitstellen des Behälters (100) mit dem Deckel (130) in einer geschlossenen Position;
wobei der Behälter (100) einen ersten Indikator aufweist, der einen Stiftkopf (161) und einen Stift (160) umfasst, der bestätigt, dass der Deckel (130) nicht geöffnet worden ist;
Öffnen des Deckels (130), wobei der erste Indikator anzeigt, dass der Deckel (130) geöffnet worden ist, wenn der Stift (160) gelöst ist;
Platzieren der Probe in dem Behälter (100);
Schließen des Deckels (130), wobei ein zweiter Indikator (401) einen geschlossenen Zustand des Deckels (130) nach einem einzelnen Öffnen anzeigt.

13. Verfahren gemäß Anspruch 12, wobei der erste Indikator (160, 161) eine Bedingung eines Inneren des Behälters (100) vor dem Öffnen des Deckels (130) anzeigt und der zweite Indikator (401) ein unbefugtes Manipulieren der Probe anzeigt.

14. Verfahren gemäß Anspruch 12 oder 13, das Folgendes beinhaltet:
Anordnen eines Testelements (590) in einer Basis des Behälters (100);
Lagern der Probe in dem Behälter zusammen mit einer Substanz, die mit einem Molekül von Interesse in der Probe reagieren kann, um einen Analyten zu produzieren;
optisches Detektieren des Vorhandenseins des Analyten, wenn er sich in dem Testelement (590) verteilt hat;
wobei die Detektion des Analyten in dem Testelement (590) das Vorhandensein des Moleküls von Interesse in der Probe anzeigt.

15. Verfahren gemäß Anspruch 14, wobei die Probe und die Substanz in dem Behälter (100) in einer flüssigen Phase gelagert werden und der Analyt sich in dem Testelement (590) verteilt, indem er sich von der flüssigen Phase in das Testelement (590) hinein bewegt.

16. Verfahren gemäß Anspruch 14, wobei das Molekül von Interesse aus einem Enzym, einem mit einem Mikroorganismus assoziierten Enzym, einem mit einem Mikroorganismus, der ein biologischer Schadstoff ist, assoziierten Enzym und einem mit einem biologischen Schadstoff, der ein koliformes Bakterium ist, assoziiertes Enzym ausgewählt ist und die Substanz ein Substrat für das Enzym umfasst.

## Revendications

1. Conteneur (100), comprenant :
un corps (110) ayant une bague (150) comprenant une fente (400) et une broche (160) ayant une tête de broche (161) ;
une fermeture (120) comprenant un couvercle (130) qui est articulé sur la bague (150) et mobile d'une position ouverte à une position fermée ; et
une languette (170) articulée sur le couvercle (130) ;
dans lequel la languette (170) sécurise le couvercle (130) dans la position fermée selon :
(i) un premier mécanisme dans lequel la languette (170) vient en prise avec la fente (400), ou
(ii) un deuxième mécanisme dans lequel la languette (170) vient en prise avec la tête de broche (161) de la broche (160), la broche (160) étant configurée pour se détacher lorsque la languette (170) et le couvercle (130) reviennent dans la position ouverte.

2. Conteneur selon la revendication 1, comprenant en outre un renfoncement (510), formé dans une base (500) du corps (110), qui assure l'alignement du conteneur avec un équipement de test.

3. Conteneur selon la revendication 2, comprenant en outre un élément de test (590) disposé dans le renfoncement (510) .

4. Conteneur selon la revendication 3, dans lequel au moins une partie de l'élément de test (590) est élevée au-dessus d'une surface intérieure de la base (500).

5. Conteneur selon la revendication 3 ou la revendication 4, dans lequel l'élément de test (590) est adapté pour venir en contact avec l'équipement de test.

6. Conteneur selon la revendication 5, dans lequel le contact comporte une communication optique avec l'équipement de test.

7. Conteneur selon l'une quelconque des revendications 3 à 6, dans lequel l'élément de test (590) est intégré dans le matériau du conteneur.

8. Conteneur selon l'une quelconque des revendications 3 à 6, dans lequel l'élément de test (590) comprend un matériau différent de celui du conteneur.

9. Conteneur selon la revendication 3, 4, 5, 6 ou 8, dans lequel l'élément de test (590) comprend un matériau siloxane.

10. Conteneur selon l'une quelconque des revendications 3 à 9, dans lequel au moins une partie de l'élément de test (590) est en contact avec un échantillon placé dans le conteneur (100).

11. Conteneur selon l'une quelconque des revendications 3 à 10, dans lequel l'alignement comprend l'alignement optique de l'élément de test (590) avec l'équipement de test.

12. Procédé de stockage d'un échantillon dans le conteneur (100) selon la revendication 1 ayant un couvercle (130), comprenant :
initialement, l'obtention du conteneur (100) avec le couvercle (130) dans une position fermée ;
le conteneur (100) ayant un premier indicateur comportant une tête de broche (161) et une broche (160) confirmant que le couvercle (130) n'a pas été ouvert ;
l'ouverture du couvercle (130), dans lequel le premier indicateur indique que le couvercle (130) a été ouvert lorsque la broche (160) est détachée ;
le placement de l'échantillon dans le conteneur (100) ;
la fermeture du couvercle (130), dans lequel un deuxième indicateur (401) indique un état fermé du couvercle (130) après une seule ouverture.

13. Procédé selon la revendication 12, dans lequel le premier indicateur (160, 161) indique une condition d'un intérieur du conteneur (100) avant l'ouverture du couvercle (130), et le deuxième indicateur (401) indique que l'échantillon a été altéré.

14. Procédé selon la revendication 12 ou la revendication 13, comprenant :
la disposition d'un élément de test (590) dans une base du conteneur (100) ;
le stockage de l'échantillon dans le conteneur ensemble avec une substance qui peut réagir avec une molécule d'intérêt dans l'échantillon pour produire un analyte ;
la détection optique de la présence de l'analyte lorsqu'il a été séparé dans l'élément de test (590) ;
dans lequel la détection de l'analyte dans l'élément de test (590) indique la présence de la molécule d'intérêt dans l'échantillon.

15. Procédé selon la revendication 14, dans lequel l'échantillon et la substance sont stockés dans le conteneur (100) en phase liquide et l'analyte se sépare dans l'élément de test (590) en se déplaçant de la phase liquide dans l'élément de test (590).

16. Procédé selon la revendication 14, dans lequel la molécule d'intérêt est choisie parmi une enzyme, une enzyme associée à un microorganisme, une enzyme associée à un microorganisme qui est un contaminant biologique, et une enzyme associée à un contaminant biologique qui est une bactérie coliforme ; et la substance comporte un substrat pour l'enzyme.
